# EUROPEAN PATENT APPLICATION

(11) **EP 2 822 232 A1**
(43) Date of publication of application: **07.01.2015**
(21) Application number: 13755686.6
(22) Date of filing: 27.02.2013
(51) Int. Cl.: H04L 12/42

(54) **NODE, RING NETWORK, PACKET TRANSFER METHOD, AND PROGRAM**

(30) Priority: 29.02.2012 JP 2012043972
(71) Applicant: NEC Corporation, Tokyo 108-8001 (JP)
(72) Inventor: TAKAHASHI, Masahiro, Tokyo 108-8001 (JP)
(74) Representative: MacDougall, Alan John Shaw
(86) International application number: PCT/JP2013/055238
(87) International publication number: WO 2013/129526

(57) **Abstract**

The present invention improves the line utilization rate of a network having a ring-type network topology. A node forms a ring-type network topology with neighboring nodes and comprises: a packet transmission and reception unit transmitting and receiving a packet via a logical link logically integrating a plurality of links formed with the neighboring nodes; a packet processing unit determining a forwarding destination of a received packet by referring to a predetermined forwarding table; a packet switching unit switching a packet to the determined forwarding destination; and a bypass management unit forwarding, if switching a packet to the determined forwarding destination causes traffic flowing through a logical link formed with a downstream node included in the ring-type network topology to exceed a predetermined band, the packet in an opposite direction by using a logical link formed with an upstream node included in the ring-type network topology.

## Description

### [Field]

### (Reference to Related Application)

This application is based upon and claims the benefit of the priority of Japanese Patent Application No. 2012-043972 filed on February 29, 2012, the disclosure of which is incorporated herein in its entirety by reference thereto.

The present invention relates to a node, a ring network, a packet forwarding method, and a program. In particular, it relates to a node included in a ring-type network topology, a ring network, a packet forwarding method, and a program.

### [Background]

With advancement of band widening techniques logically integrating a plurality of lines as a single line such as link aggregation and IMA (Inverse Multiplexing for ATM (Asynchronous Transfer Mode)) using Ethernet (registered mark), it is becoming easier and easier to ensure transmission capacity. In addition, to improve network reliability and to achieve a cost advantage, a ring-type network topology is increasingly used.

PTL 1 discloses a configuration for enabling communication even when a failure is caused in a link between a node and a client apparatus or in a node itself, based on a RPR (Resilient Packet Ring) standardized by IEEE802.17.

In addition, PTL 2 discloses a configuration used for a ring-shaped network in which communication apparatuses are connected via a plurality of lines treated as a single transmission path. This configuration includes a function of changing a relay path to a path in an opposite direction in the network if a failure is detected in any one of the plurality of lines.

### [Citation List]

### [Patent Literature]

[PTL 1]
   International Publication No. WO 2007/080831 A1
[PTL 2]
   Japanese Patent Kokai Publication No. JP2009-284406A

### [Summary]

### [Technical Problem]

The following analysis has been given by the present inventor. In addition to meeting an increased demand for communication, ensuring the capacity increased thereby, and improving the reliability, a network having the above ring-type topology has a problem with the line utilization rate (availability).

In this respect, while improvement in resistance to failures is addressed in PTLs 1 and 2, improvement in line utilization rate is not addressed at all.

It is an object of the present invention to provide a configuration that can contribute to improvement in the line utilization rate of a network having a ring-type topology.

### [Solution to Problem]

According to a first aspect of the present invention, there is provided a node, forming a ring-type network topology with neighboring nodes and comprising: a packet transmission and reception unit transmitting and receiving a packet via a logical link logically integrating a plurality of links formed with the neighboring nodes; a packet processing unit determining a forwarding destination of a received packet by referring to a predetermined forwarding table; a packet switching unit switching a packet to the determined forwarding destination; and a bypass management unit forwarding, if switching a packet to the determined forwarding destination causes traffic flowing through a logical link formed with a downstream node included in the ring-type network topology to exceed a predetermined band (or level, hereafter the term "band" is mainly used in the sense of "traffic-volume".), the packet in an opposite direction by using a logical link formed with an upstream node included in the ring-type network topology.

According to a second aspect of the present invention, there is provided a ring network formed by connecting a plurality of nodes, each of which corresponds to the above node, in the shape of a ring.

According to a third aspect of the present invention, there is provided a packet forwarding method, causing a node forming a ring-type network topology with neighboring nodes and transmitting and receiving a packet via a logical link logically integrating a plurality of links formed with the neighboring nodes to perform steps of: monitoring traffic flowing through a logical link formed with a downstream node included in the ring-type network topology and determining a forwarding destination of a received packet by referring to a predetermined forwarding table; forwarding a packet to the determined destination if traffic flowing through a port corresponding to the determined forwarding destination is a predetermined band or less; and forwarding a packet in an opposite direction by using a logical link formed with an upstream node included in the ring-type network topology if traffic flowing through a port corresponding to the determined forwarding destination exceeds the predetermined band. This method is associated with a certain machine(s), namely, with the node(s) included in a ring topology.

According to a fourth aspect of the present invention, there is provided a program, causing a computer mounted on a node forming a ring-type network topology with neighboring nodes and transmitting and receiving a packet via a logical link logically integrating a plurality of links formed with the neighboring nodes to perform processing for: monitoring traffic flowing through a logical link formed with a downstream node included in the ring-type network topology and determining a forwarding destination of a received packet by referring to a predetermined forwarding table; forwarding a packet to the determined destination if traffic flowing through a port corresponding to the determined forwarding destination is a predetermined band or less; and forwarding a packet in an opposite direction by using a logical link formed with an upstream node included in the ring-type network topology if traffic flowing through a port corresponding to the determined forwarding destination exceeds the predetermined band. This program can be recorded in a computer-readable storage medium. Namely, the present invention can be embodied as a computer program product.

### [Advantageous Effects of Invention]

The present invention can contribute to improvement in the line utilization rate of a network having a ring-type network topology.

### [Brief Description of Drawings]

[Fig. 1]

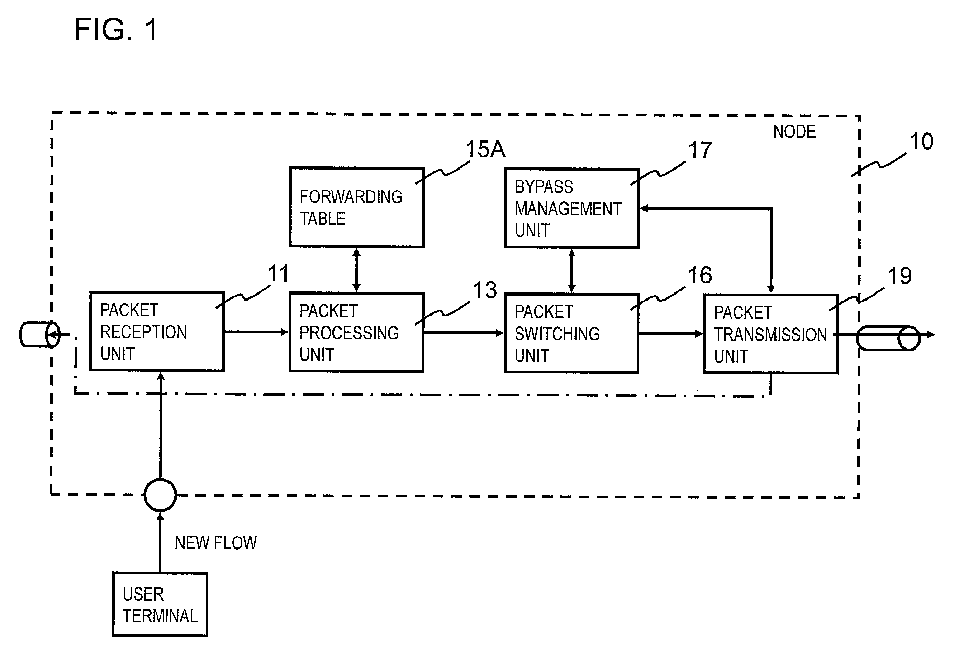

   Fig. 1 illustrates a schematic configuration of a node according to an exemplary embodiment of the present invention.
[Fig. 2]

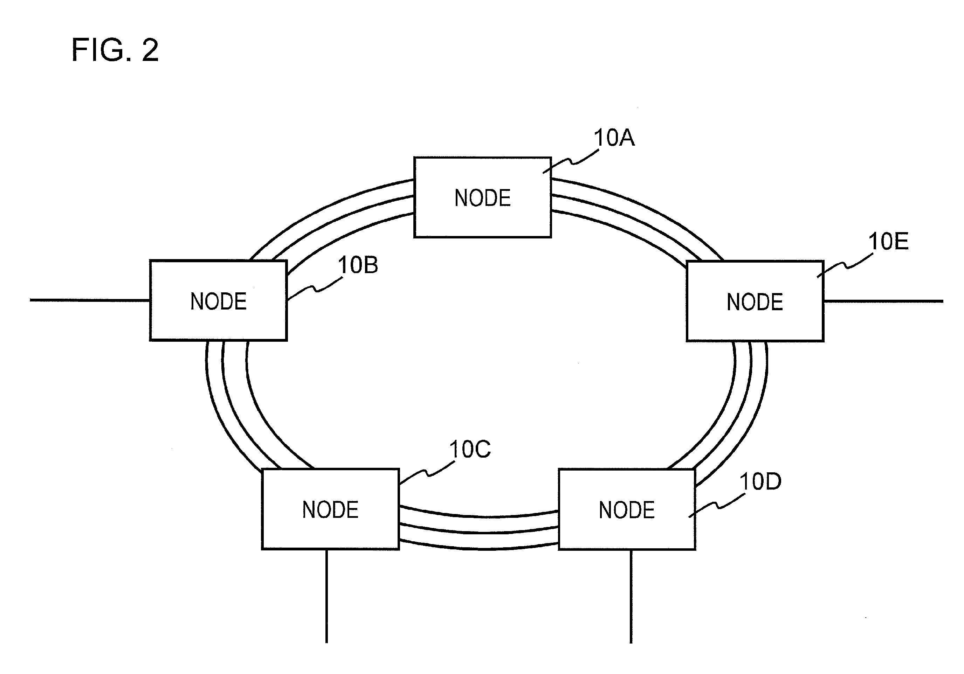

   Fig. 2 illustrates a configuration of a ring network according to a first exemplary embodiment of the present invention.
[Fig. 3]

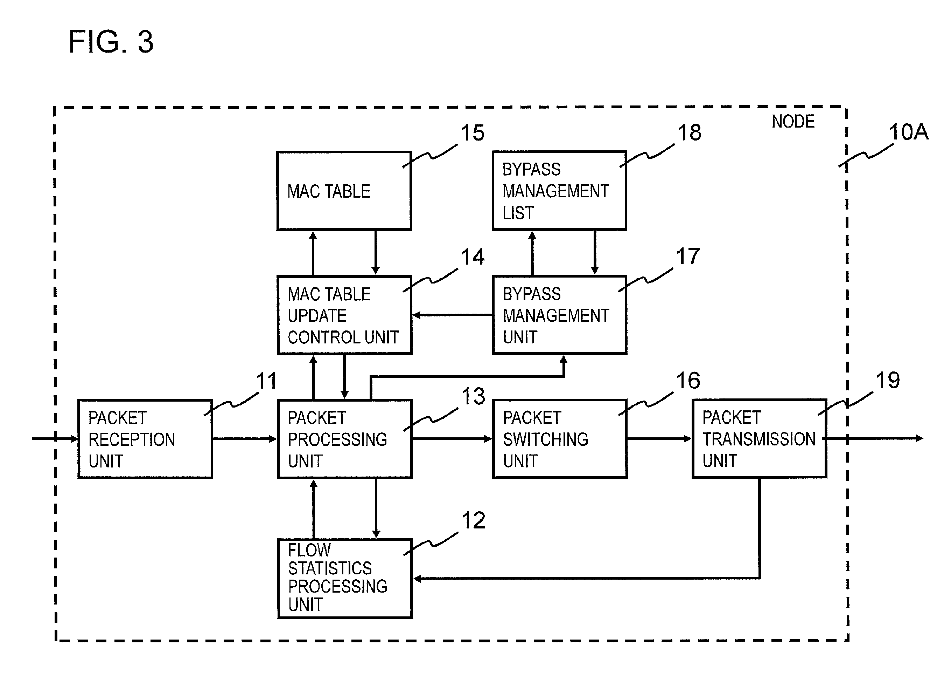

   Fig. 3 illustrates a detailed configuration of a node according to the first exemplary embodiment of the present invention.
[Fig. 4]

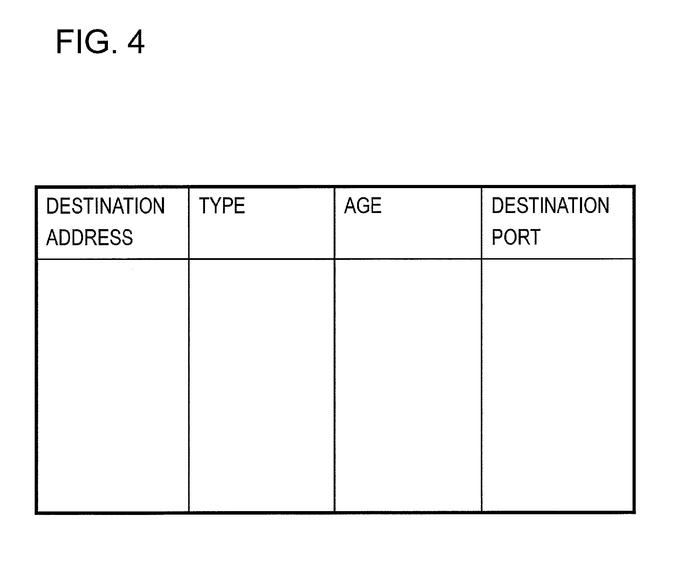

   Fig. 4 illustrates a MAC table stored in the node according to the first exemplary embodiment of the present invention.
[Fig. 5]

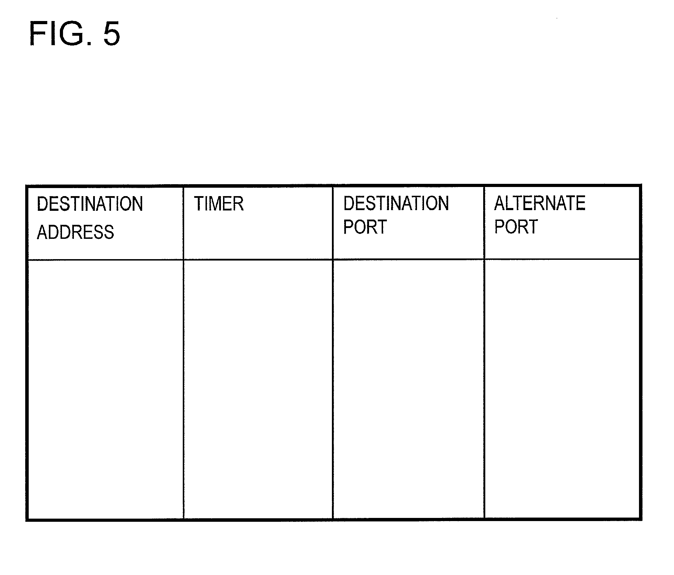

   Fig. 5 illustrates a bypass management list stored in the node according to the first exemplary embodiment of the present invention.
[Fig. 6]

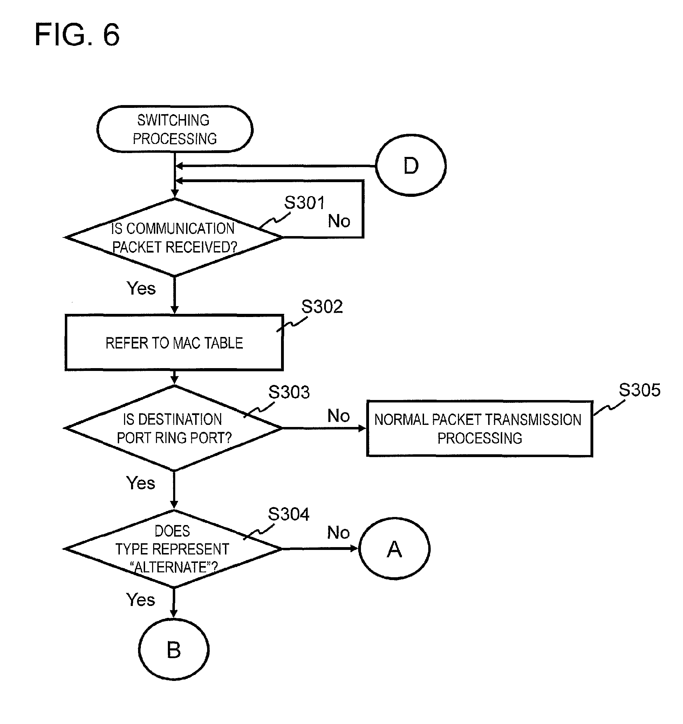

   Fig. 6 is a flowchart illustrating an operation (switching processing) of the node according to the first exemplary embodiment of the present invention.
[Fig. 7]

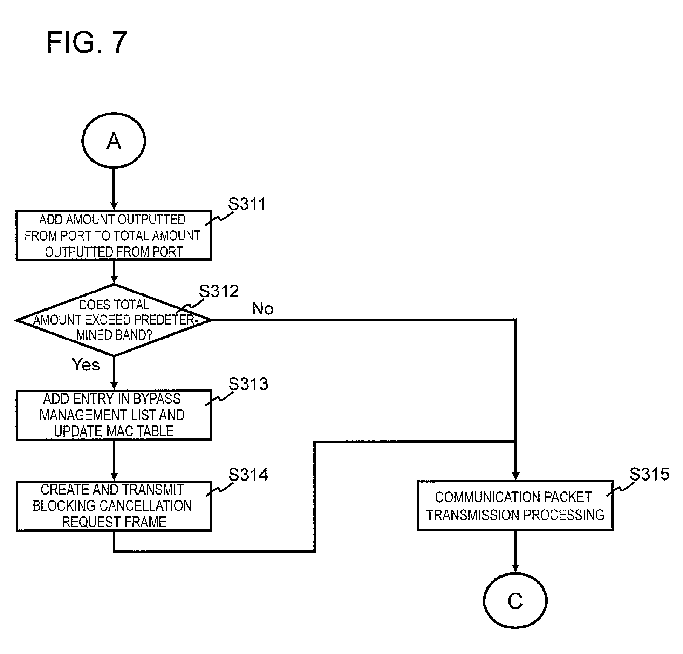

   Fig. 7 is a diagram that follows Fig. 6.
[Fig. 8]

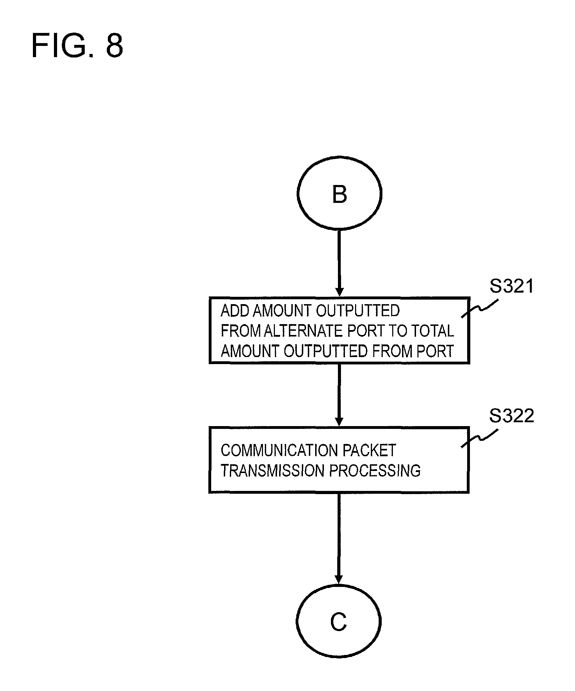

   Fig. 8 is a diagram that follows Fig. 6.
[Fig. 9]

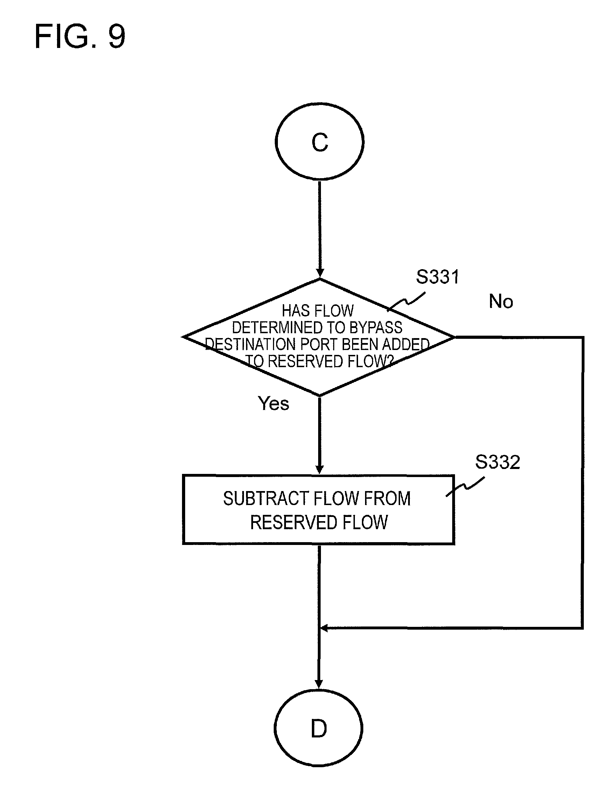

   Fig. 9 is a diagram that follows Figs. 7 and 8.
[Fig. 10]

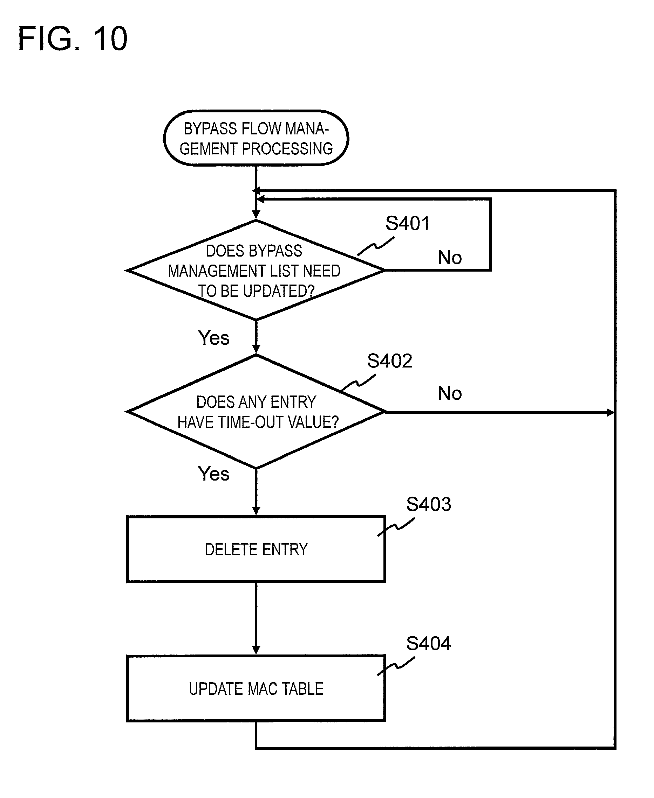

   Fig. 10 is a flowchart illustrating an operation (bypass flow management processing) of the node according to the first exemplary embodiment of the present invention.
[Fig. 11]

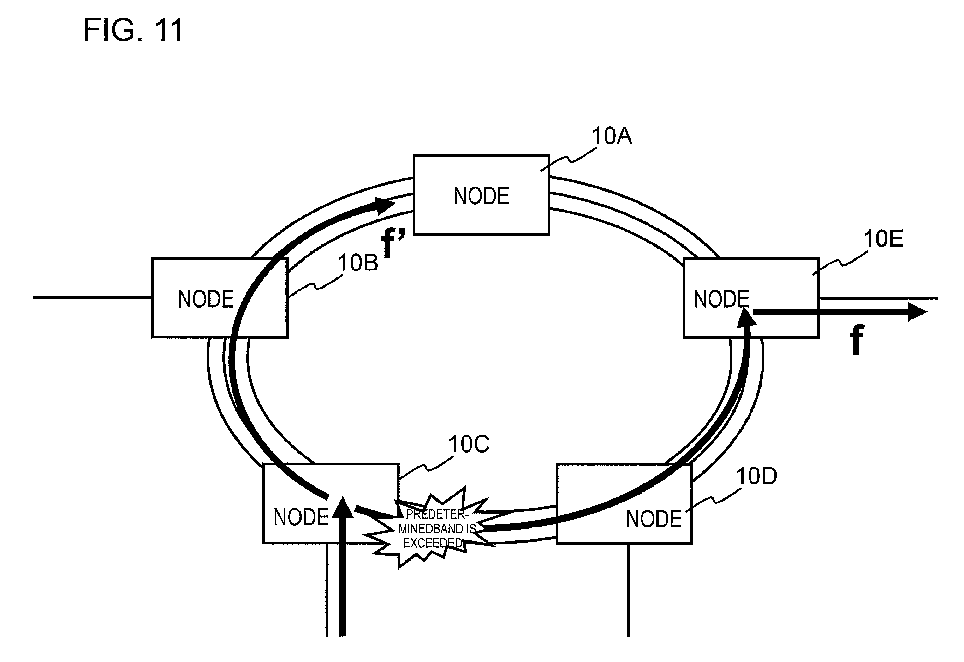

   Fig. 11 illustrates an operation according to the first exemplary embodiment of the present invention.
[Fig. 12]

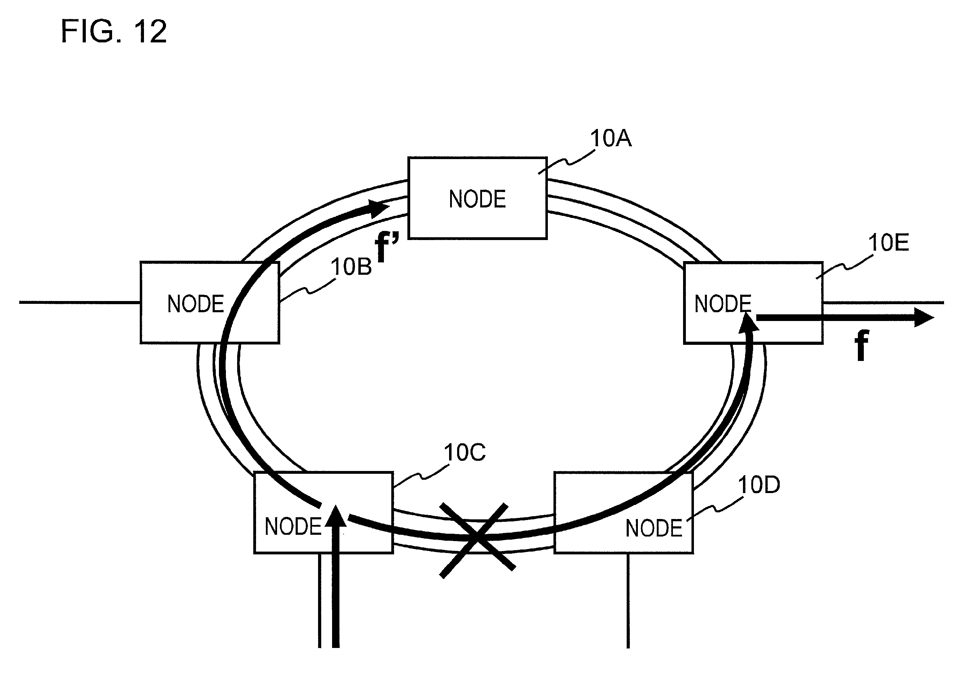

   Fig. 12 illustrates an operation according to the first exemplary embodiment of the present invention.

### [Description of Embodiments]

First, an outline of an exemplary embodiment of the present invention will be described with reference to the drawings. In the following outline, various components are denoted by reference characters for the sake of convenience. Namely, the following reference characters are merely used as examples to facilitate understanding of the present invention, not to limit the present invention to the illustrated modes.

As illustrated in Fig. 1, an exemplary embodiment of the present invention can be realized by a node 10 forming a ring topology with neighboring nodes and transmitting and receiving a packet via a logical link logically integrating a plurality of links formed with the neighboring nodes. This node includes a packet reception unit 11, a packet transmission unit 19, a packet processing unit 13 determining a forwarding destination of a received packet by referring to a predetermined forwarding table 15A, a packet switching unit 16 switching a packet to the determined forwarding destination, and a bypass management unit 17.

More specifically, if traffic flowing through a logical link formed between the node 10 and a downstream node exceeds a predetermined band, the bypass management unit 17 performs an operation of forwarding a packet in an opposite direction by using a logical link formed with an upstream node included in the ring-type network topology (see an alternate long and short dash line in Fig. 1). In this way, for example, it is possible to distribute traffic and improve the line utilization rate of a network as a whole, without having to discard a new flow received from a user terminal in Fig. 1.

### [First exemplary embodiment]

Next, a first exemplary embodiment of the present invention will be described in detail with reference to the drawings. Fig. 2 illustrates a configuration of a ring network according to the first exemplary embodiment of the present invention. In Fig. 2, nodes 10A to 10E are connected to the respective neighboring nodes via a link (a logical link), which is a logical set of a plurality of lines.

The logical link can be realized by a line band widening technique called trunking, link aggregation, etc. For example, various network apparatus suppliers call their own apparatuses by the respective function names, such as port trunking, bonding, and teaming. These techniques treat a plurality of links in the same section as a single virtual link to achieve redundancy (improvement in availability), load balancing, parallelization, etc.

Fig. 3 illustrates a detailed configuration of a node according to the first exemplary embodiment of the present invention. As illustrated in Fig. 3, the node includes a packet reception unit 11, a flow statistics processing unit 12, a packet processing unit 13, a MAC (Media Access Control) table update control unit 14 managing a MAC table 15, a packet switching unit 16, a bypass management unit 17 managing a bypass management list 18, and a packet transmission unit 19.

The packet reception unit 11 includes a physical layer (PHY) function and a MAC function. After receiving an electrical signal or an optical signal and reassembling the physical signal as a packet, the packet reception unit 11 calculates the FCS (Frame Check Sequence) of the packet and determines whether the received packet is normal. If the packet reception unit 11 determines that the received packet is normal, the packet reception unit 11 forwards the packet to the packet processing unit 13. However, if the packet reception unit 11 determines that the received packet is not normal, the packet reception unit 11 discards the packet.

When receiving the packet from the packet reception unit 11, the packet processing unit 13 requests the MAC table update control unit 14 to search the MAC table 15. When receiving a search result about a destination port corresponding to the received packet from the MAC table update control unit 14, the packet processing unit 13 transmits the received packet and the destination port information to the packet switching unit 16.

In addition, the packet processing unit 13 transmits the size of the received packet and the destination port information to the flow statistics processing unit 12. When notified by the flow statistics processing unit 12 that the packet cannot be transmitted from the destination port, the packet processing unit 13 transmits the received packet and the search result of the MAC table 15 to the bypass management unit 17.

When receiving a MAC table search request from the packet processing unit 13, the MAC table update control unit 14 extracts a destination port associated with the destination address of the received packet from the MAC table 15 and notifies the packet processing unit 13 of the extracted destination port.

In addition, when receiving a request for changing an entry in the MAC table 15 from the bypass management unit 17, the MAC table update control unit 14 changes a type value and a destination port value in the entry.

Fig. 4 illustrates the MAC table 15 stored in the node according to the present exemplary embodiment. In each entry in the MAC table in Fig. 4, a destination address, a type, an aging timer for performing aging processing on the entry, and a destination port are associated with each other and stored. In the present exemplary embodiment, as type information in each entry, "Alternate" representing a bypass target flow can be set, in addition to general information "Dynamic" and "Static".

The flow statistics processing unit 12 grasps an L1 forwarding rate for each port, based on packet transmission information received from the packet transmission unit 19. In addition, for each destination port, the flow statistics processing unit 12 grasps the reserved band of a flow to be transmitted, by using statistical methods and based on information received from the packet processing unit 13. Based on the reserved band and the L1 forwarding rate for each port, the flow statistics processing unit 12 determines whether a new packet that is about to be transmitted by the packet processing unit 13 can be transmitted from the destination port and notifies the packet processing unit 13 of the result of the determination. A reserved band per destination port represents the number of bytes (or the number of packets) predicated to be outputted. The reserved band is statistically grasped and managed based on a statistical amount of a counter value provided for each port, for example.

When receiving a request from the packet processing unit 13, the bypass management unit 17 creates an entry for managing a bypass flow in the bypass management list 18. In addition, the bypass management unit 17 requests the MAC table update control unit 14 to change a type value and a destination port value in an entry in the MAC table 15, the entry corresponding to that created in the bypass management list 18.

Fig. 5 illustrates the bypass management list 18 stored in the node according to the present exemplary embodiment. In each entry in the bypass management list in Fig. 5, a destination address, a timer representing a valid period in the entry, a destination port, and an alternate port are associated with each other and stored. The destination port is information about a destination port to which a packet transmitted from the packet processing unit 13 should originally be transmitted, and the alternate port information is information about a port through which a corresponding flow including the packet is transmitted. As such alternate port, a port (upstream port) that is a counterpart of the destination port on the ring topology is selected.

In addition, the bypass management unit 17 performs timer management on each entry by using a value in the timer field in the bypass management list illustrated in Fig. 5. More specifically, when the timer in an entry in the bypass management list 18 expires, the bypass management unit 17 deletes the entry and requests the MAC table update control unit 14 to change (recover) a type value and a destination port value in the entry in the MAC table 15, the entry corresponding to the deleted entry.

Based on the destination port information transmitted from the packet processing unit 13, the packet switching unit 16 switches a packet to the packet transmission unit 19 having the corresponding destination port.

The packet transmission unit 19 includes a physical layer (PHY) function and a MAC function, converts a switched packet from the packet switching unit 16 into an electrical signal or an optical signal, and outputs the converted signal.

A configuration of the node 10A according to the present exemplary embodiment has thus been described in detail. Since the nodes 10B to 10E have the same configuration as that of the node 10A, description thereof will be omitted.

In addition, in the present exemplary embodiment, each of the nodes 10A to 10E has the following function. Namely, when a failure is caused in a logical link between a node and a downstream node, the node can detect the failure and form a logical link having a partially degenerated link. This failure detection function can be realized by using a technique for detecting a failure, such as by using non-reception of a Keepalive packet. In addition, the function of forming a logical link having a partially degenerated link can be realized by using the above link aggregation function or the like.

Each unit (processing means) of the node illustrated in Fig. 3 can be realized by a computer program that causes a computer on which the node is mounted to user hardware of the computer and to perform the above corresponding processing.

Next, an operation according to the present exemplary embodiment will be described in detail with reference to the drawings. Fig. 6 is a flowchart illustrating an operation (switching processing) of the node according to the first exemplary embodiment of the present invention. When receiving a packet, the packet reception unit 11 determines whether the packet is normal based on the FCS of the packet. If the packet is normal, the packet reception unit 11 outputs the packet to the packet processing unit 13 (step S301 in Fig. 6).

The packet processing unit 13 requests the MAC table update control unit 14 to acquire destination port information about the packet. The MAC table update control unit 14 searches the MAC table 15 for an entry corresponding to the destination of the received packet and transmits a search result to the packet processing unit 13 (step S302 in Fig. 6). The MAC table update control unit 14 transmits type information and destination port information in the retrieved entry to the packet processing unit 13.

Next, based on the destination port information about the received packet received from the MAC table update control unit 14, the packet processing unit 13 determines whether the destination port is a ring port included in a ring network (step S303 in Fig. 6). If the destination port is not a ring port, for example, if the destination port is a port connected to a client of its own node (No in step S303 in Fig. 6), normal packet transmission processing to the destination port is performed via the packet switching unit 16 and the packet transmission unit 19 (step S305 in Fig. 6).

In contrast, if the destination port is a ring port (Yes in step S303 in Fig. 6), the packet processing unit 13 determines whether the type information in the entry received from the MAC table update control unit 14 represents "Alternate" (step S304 in Fig. 6). If the type information in the entry does not represent "Alternate", it is determined that the packet does not belong to a bypass target flow. Thus, processing illustrated in Fig. 7 is performed (No in step S304 in Fig. 6). However, if the type information in the entry represents "Alternate", it is determined that the packet belongs to a bypass target flow. Thus, processing illustrated in Fig. 8 is performed (Yes in step S304 in Fig. 6).

First, an operation performed when the packet processing unit 13 determines that the type information in the entry does not represent "Alternate" in step S304 in Fig. 6 will be described.

Fig. 7 is a flowchart illustrating processing that continues after connector A in Fig. 6. If the type information in the entry extracted from the MAC table 15 does not represent "Alternate", the packet processing unit 13 notifies the flow statistics processing unit 12 of the destination port information about the packet and of the size of the packet. By using the destination port information about the packet and the packet size given by the packet size packet processing unit 13, the flow statistics processing unit 12 adds the packet size to a traffic amount predicated to be transmitted from the destination port and calculates a total traffic amount transmitted from the destination port (step S311 in Fig. 7).

In addition, the flow statistics processing unit 12 calculates the difference between the total traffic amount transmitted from the destination port and the L1 forwarding rate of the destination port, determines whether the total traffic amount exceeds the forwarding band, and notifies the packet processing unit 13 of the result of the determination (step S312 in Fig. 7).

If the packet processing unit 13 is notified by the flow statistics processing unit 12 that the total traffic amount does not exceed the forwarding band (No in step S312 in Fig. 7), the packet processing unit 13 determines to transmit the received packet from the destination port and outputs the packet and the destination port information to the packet switching unit 16 (step S315 in Fig. 7).

If the packet processing unit 13 is notified by the flow statistics processing unit 12 that the total traffic amount exceeds the forwarding band (Yes in step S312 in Fig. 7), the packet processing unit 13 transmits the received packet and the destination port information to the bypass management unit 17 and requests the bypass management unit 17 to perform bypass processing. When receiving the request, the bypass management unit 17 adds an entry having the same destination address as that of the packet in the bypass management list 18 and requests the MAC table update control unit 14 to update the destination port information in the corresponding entry in the MAC table (step S313 in Fig. 7).

More specifically, the bypass management unit 17 adds an entry having a packet destination address, a timer, destination port information, and alternate port information in the bypass management list illustrated in Fig. 5. As the destination port information, the destination port information provided from the MAC table update control unit 14 to the packet processing unit 13 is set. As the alternate port, a port that is selected to assemble a ring topology in the node and that is a counterpart of the destination port is selected. In addition, the bypass management unit 17 requests the MAC table update control unit 14 to change the type information to "Alternate" and the destination port information to the alternate port information in the corresponding entry in the MAC table 15. In this way, the type information in the corresponding entry in the MAC table 15 can be set to "Alternate" and the destination port information represents the same information as the alternate port information. Thus, packets that are subsequent to the received packet and that belong to the same flow are outputted from the alternate port (see No in step S304 in Fig. 6).

Next, the packet processing unit 13 instructs the packet switching unit 16 to transmit a blocking cancellation request from the Alternate port to a blocking port in the ring topology (step S314 in Fig. 7). For example, such blocking cancellation request can be configured by a frame in which a MAC address of a packet is included in a BPDU (Bridge Protocol Data Unit).

Next, the packet processing unit 13 instructs the packet switching unit 16 to transmit the received packet from the alternate port (step S315 in Fig. 7). Thus, if the flow statistics processing unit 12 determines that the total traffic amount exceeds the forwarding band, corresponding packets are forwarded from the alternate port via an upstream node.

Next, an operation performed when the packet processing unit 13 determines that the type information in the entry represents "Alternate" in step S304 in Fig. 6 will be described.

Fig. 8 is a flowchart illustrating processing that continues after connector B in Fig. 6. If the type information in the entry extracted from the MAC table 15 represents "Alternate", the packet processing unit 13 notifies the flow statistics processing unit 12 of the destination port information about the packet (the destination port information has been rewritten to the alternate port information as described above) and the packet size. By using the destination port information about the packet and the packet size given by the packet processing unit 13, the flow statistics processing unit 12 adds the packet size to the traffic amount predicated to be transmitted from the destination port and calculates a total traffic amount transmitted from the destination port (step S321 in Fig. 8).

Next, the packet processing unit 13 instructs the packet switching unit 16 to transmit the received packet from the port specified by the destination port information (the destination port information has been rewritten to alternate port information as described above) (step S322 in Fig. 8).

Next, regardless of whether the type information in the entry extracted from the MAC table 15 represents "Alternate" or not, processing that continues after connector C in Fig. 9 will be performed. First, if the flow determined to bypass the destination port of the packet given by the packet processing unit 13 has been added to calculate the above total traffic amount as a reserved band (Yes in step S331), the flow statistics processing unit 12 subtracts this flow from the reserved band (step S332).

Next, processing performed by the bypass management unit 17 in the node for updating the bypass management list will be described. Fig. 10 is a flowchart illustrating an operation (bypass flow management processing) of the node according to the first exemplary embodiment of the present invention.

First, when the bypass management list 18 needs to be updated such as when a predetermined time elapses or when traffic through a bypass target port is decreased (Yes in step S401 in Fig. 10), the bypass management unit 17 refers to the timer field in each entry in the bypass management list 18 and searches for an entry having a time-out value (step S402).

As a result of the search, if the bypass management unit 17 finds an entry having a time-out value (Yes in step S402 in Fig. 10), the bypass management unit 17 deletes the entry from the bypass management list 18 (step S403 in Fig. 10). In addition, the bypass management unit 17 requests the MAC table update control unit 14 to update (recover) the MAC table 15. The MAC table update control unit 14 updates (recovers) the MAC table 15 so that the MAC table 15 includes information included therein before the rewriting operation in step S313 in Fig. 7. More specifically, the MAC table update control unit 14 recovers the type information in the entry in the MAC table 15, the entry corresponding to the entry deleted from the bypass management list 18, to "Dynamic" or "Static" and changes the destination port value to the ring port (the original destination port) that is a counterpart of the alternate port.

Thus, according to the present exemplary embodiment, the band is not exceeded by transmission of received packets, and instead, the received packets can be transmitted to an intended destination without discarding the packets, as illustrated in Fig. 11. This is because the direction of the traffic flow is inverted on the ring topology if there is a chance that the band could be exceeded. In addition, in this way, the line utilization rate can be improved.

In addition, according to the present exemplary embodiment, even if a failure is caused in a link between certain nodes, since the direction of the traffic flow is inverted on the ring topology, the received packets can be transmitted to an intended destination without discarding the packets.

While each exemplary embodiment of the present invention has thus been described, the present invention is not limited thereto. Further variations, substitutions, and adjustments can be made without departing from the basic technical concept of the present invention. For example, the MAC table in Fig. 4 and the bypass management list in Fig. 5 used in the description of the above exemplary embodiment have been illustrated as examples to facilitate understanding of the present invention. Namely, various other configurations are possible.

In addition, while not described in the above exemplary embodiment, a link between an arbitrary pair of nodes among the nodes 10A to 10E may be established by wired or wireless connection. For example, each of the nodes 10A to 10E may be configured by a wireless transmission node including an adaptive modulation function.

In addition, the above exemplary embodiment describes that the forwarding rate of an output port is compared with a total traffic amount and that, if the total traffic amount exceeds the forwarding band, forwarding packets in an opposite direction is started. However, if the total traffic amount exceeds a predetermined threshold (a band value, etc) or if the forwarding rate falls below a predetermined threshold, forwarding packets in an opposite direction may be started.

The disclosure of each of the above PTLs is incorporated herein by reference thereto. Modifications and adjustments of the exemplary embodiment(s) and example(s) are possible within the scope of the overall disclosure (including the claims) of the present invention and based on the basic technical concept of the present invention. Various combinations and selections of various disclosed elements (including each element in each claim, example, drawing, etc.) are possible within the scope of the claims of the present invention. Namely, the present invention of course includes various variations and modifications that could be made by those skilled in the art according to the overall disclosure including the claims and the technical concept.

### [Reference Signs List]

- 10, 10A to 10E: node
- 11: packet reception unit
- 12: flow statistics processing unit
- 13: packet processing unit
- 14: MAC table update control unit
- 15: MAC table
- 15A: forwarding table
- 16: packet switching unit
- 17: bypass management unit
- 18: bypass management list
- 19: packet transmission unit

## Claims

1. A node, forming a ring-type network topology with neighboring nodes and comprising:
a packet transmission and reception unit transmitting and receiving a packet via a logical link logically integrating a plurality of links formed with the neighboring nodes;
a packet processing unit determining a forwarding destination of a received packet by referring to a predetermined forwarding table;
a packet switching unit switching a packet to the determined forwarding destination; and
a bypass management unit forwarding, if switching a packet to the determined forwarding destination causes traffic flowing through a logical link formed with a downstream node included in the ring-type network topology to exceed a predetermined band, the packet in an opposite direction by using a logical link formed with an upstream node included in the ring-type network topology.

2. The node according to claim 1;
wherein the bypass management unit forwards the packet in the opposite direction if a total traffic amount of an output port to which a packet amount forwarded to the determined forwarding destination has been added exceeds a current forwarding rate of the output port.

3. The node according to claim 1 or 2;
wherein, before the packet is forwarded in the opposite direction, the node transmits a blocking cancellation request to the upstream node.

4. The node according to any one of claims 1 to 3, further comprising:
a bypass management list managing a flow forwarded in the opposite direction;
wherein, if a packet needs to be forwarded in the opposite direction, the bypass management unit rewrites a forwarding destination of the packet in the forwarding table to a forwarding destination in the opposite direction and adds a new entry representing a flow for which the forwarding destination has been rewritten in the bypass management list; and
wherein, for packets belonging to the flow for which the forwarding destination has been rewritten, the packet processing unit determines a forwarding destination in accordance with the rewritten forwarding table.

5. The node according to any one of claims 1 to 4;
wherein, if no packet is received within a predetermined time period, the bypass management unit deletes a corresponding entry in the bypass management list and recovers a forwarding destination in the corresponding entry in the forwarding table.

6. The node according to any one of claims 1 to 5, further comprising:
a flow statistics processing unit obtaining, based on transition of traffic of each output port forming the logical link, a reserved traffic of each output port, calculating a total traffic amount of each output port including corresponding reserved traffic and determining whether the total traffic amount exceeds a current forwarding rate of the corresponding output port.

7. A ring network formed by connecting nodes according to any one of claims 1 to 6 in the form of a ring.

8. A packet forwarding method, causing a node forming a ring-type network topology with neighboring nodes and transmitting and receiving a packet via a logical link logically integrating a plurality of links formed with the neighboring nodes to perform steps of:
monitoring traffic flowing through a logical link formed with a downstream node included in the ring-type network topology and determining a forwarding destination of a received packet by referring to a predetermined forwarding table;
forwarding a packet to the determined destination if traffic flowing through a port corresponding to the determined forwarding destination is a predetermined band or less; and
forwarding a packet in an opposite direction by using a logical link formed with an upstream node included in the ring-type network topology if traffic flowing through a port corresponding to the determined forwarding destination exceeds the predetermined band.

9. A program, causing a computer mounted on a node forming a ring-type network topology with neighboring nodes and transmitting and receiving a packet via a logical link logically integrating a plurality of links formed with the neighboring nodes to perform processing for:
monitoring traffic flowing through a logical link formed with a downstream node included in the ring-type network topology and determining a forwarding destination of a received packet by referring to a predetermined forwarding table;
forwarding a packet to the determined destination if traffic flowing through a port corresponding to the determined forwarding destination is a predetermined band or less; and
forwarding a packet in an opposite direction by using a logical link formed with an upstream node included in the ring-type network topology if traffic flowing through a port corresponding to the determined forwarding destination exceeds the predetermined band.
